# EUROPÄISCHE PATENTSCHRIFT

(11) **EP 1 010 607 B1**
(45) Veröffentlichungstag und Bekanntmachung des Hinweises auf die Patenterteilung: **19.05.2004**
(21) Anmeldenummer: 99125090.3
(22) Anmeldetag: 16.12.1999
(51) Int. Cl.: B62D 33/04, B60J 5/10, B60J 10/08

(54) **Laderaumaufbau**
Loading space construction
Construction d'espace de chargement

(30) Priorität: 17.12.1998 DE 19858445; 01.09.1999 DE 29915328 U
(43) Veröffentlichungstag der Anmeldung: 21.06.2000
(73) Patentinhaber: PWP SA, CH-1530 Payerne (CH)
(72) Erfinder: Schäfer, Götz, 1530 Payerne (CH)
(74) Vertreter: Müller, Enno, Dipl.-Ing.

(56) Entgegenhaltungen:
- EP-A- 0 483 758
- GB-A- 2 181 476
- US-A- 4 085 966
- US-A- 5 499 475

## Beschreibung

Die vorliegende Erfindung betrifft einen Laderaumaufbau, insbesondere eines Lastkraftwagens, mit einer um eine senkrechte Drehachse schwenkbaren Laderaumtür, die eine Dichtung zur dichtenden Zusammenwirkung mit einer Gegenwandung des Laderaumaufbaues aufweist.

Derartige Laderaumaufbauten sind mit Türsystemen bekannt, bei denen die Türflügel mittels Drehstangenverschlüssen auf den Portalrahmen gepresst werden. Die Anpressfläche zwischen dem Portalrahmen des Laderaumaufbaues und der Laderaumtür ist dabei als eine glatte Fläche ausgeführt. Am oberen Rand der Tür kann sich bei dieser Konstruktion im Winter Schnee, im Sommer Regenwasser ansammeln, so dass die Feuchtigkeit auch bei einer noch so guten Dichtung durch die Anpressfläche hindurch in das Fahrzeug eindringen kann. Dies ist vor allem beim Fahrzeugstillstand der Fall.

Ein Laderaumaufbau ist im übrigen auch aus der EP 0 698 515 A2 bekannt. Der darin beschriebene Kastenaufbau eines Lastkraftwagens weist eine stirnseitige Laderaumtür mit einer Innenwandung zur dichtenden Zusammenwirkung mit dem Kastenaufbau auf, wobei die Innenwandung in ihrem Randbereich eine auch im Bereich von randseitigen Scharniergliedern integral durchgehende Dichtwandung aufweist. Diese entsprechend umlaufende Dichtwandung der Laderaumtür wird in der Verschlussstellung gegen eine glatte, die Türöffnung des Laderaumaufbaues umrandende Gegenwandung gepresst.

Aus der gattungsgemäßen US 4,085,966 B1 ist ein Laderaumaufbau für Lastkraftwagen bekannt mit einer dichtenden Zusammenwirkung zwischen der Laderaumtür und dem Laderaumaufbau. Eine Ablaufrinne ist an dem Laderaumaufbau angebracht und erstreckt sich ausgehend von einem oberen Querholm des Laderaumaufbaues. Davon ausgehend ist es eine Aufgabe der vorliegenden Erfindung, einen gattungsgemäßen Laderaumaufbau in gebrauchsvorteilhafter Weise weiterzubilden.

Gelöst ist die Aufgabe zunächst und im wesentlichen beim Gegenstand von Anspruch 1, wobei darauf abgestellt ist, dass der Dichtung eine Ablaufkante zugeordnet ist, die sich ausgehend von einem oberen Randbereich der Laderaumtür in Verschlussposition in Richtung Laderaum in eine von der Gegenwandung berandete, der Laderaumtür in Verschlussposition zugewandte Rinne hinein erstreckt.

Durch diese erfindungsgemäße Ausgestaltung wird erreicht, daß auf die Dichtung am oberen Rand der Laderaumtür auftreffendes Regenwasser oder Schnee nur bis zu der Oberseite der Ablaufkante gelangt und von dieser abgeleitet wird, so daß keine Feuchtigkeit in das Innere des Laderaumaufbaues eindringen kann. Bevorzugt ist daran gedacht, daß sich die Ablaufkante ausgehend von dem oberen Randbereich der Laderaumtür ansteigend in Richtung Laderaum erstreckt. Auf die Oberseite der Ablaufkante gelangende Feuchtigkeit wird durch die entsprechende Schräge in Richtung auf die der Rinne abgewandte Seite der Ablaufkante abgeführt, wodurch eine gute Dichtwirkung gegeben ist. In einer bevorzugten Ausführungsform erstreckt sich die Rinne in Verschlußposition der Laderaumtür in ihrer Längsrichtung parallel zu der Laderaumtür und durchgehend über die gesamte Länge des oberen Randes hinweg, wodurch sich eine über die Türbreite hinweg gleichmäßig gute Dichtwirkung ergibt. Es ist weiter bevorzugt, daß der Laderaumaufbau einen Querholm aufweist und daß die Rinne in oder an dem Querholm ausgebildet ist. Alternativ besteht auch die Möglichkeit, daß der Laderaumaufbau ein mit dem Querholm verbundenes Querprofil aufweist und daß die Rinne in oder an dem Querprofil ausgebildet ist. In beiden Fällen wird eine platzsparende und insofern vorteilhafte Gestaltung der Dichtung erreicht. In weiterer Einzelheit besteht die Möglichkeit, daß der Querholm und/oder das Querprofil im Querschnitt ein geschlossenes Hohlprofil aufweist. Je nach Anwendungsfall kann jedoch der Querholm und/oder das Querprofil im Querschnitt alternativ oder kombinativ auch ein offenes Hohlprofil, insbesondere ein im Querschnitt S-förmiges Hohlprofil, aufweisen. Der erfindungsgemäße Laderaumaufbau kann damit auch bezüglich der Gegenwandung im Bereich des oberen Randes der Laderaumtür an vielfältige konstruktive Erfordernisse angepaßt werden. In einer zweckmäßigen Ausgestaltung ist vorgesehen, daß die Rinne von außen in das geschlossene Hohlprofil eingeformt ist, so daß sie sich im Querschnitt von außen in das geschlossene Hohlprofil hinein erstreckt. Die Wandung des Hohlprofils braucht dadurch zur Ausbildung der Rinne keine Durchbrüche aufzuweisen, so daß die bekanntlich hohe Steifigkeit des geschlossenen Hohlprofils beibehalten wird. Zugleich wird erreicht, daß in der Luft enthaltene Feuchtigkeit oder etwa im Bereich der Ablaufkante aufgewirbelte Feuchtigkeitströpfchen im Bereich der Dichtung nicht in das Hohlprofil eindringen können. Bei dieser Ausgestaltung kann die Rinne von außen im Querschnitt taschenartig in das Hohlprofil eingeformt sein, wobei sich wie auch bei den vorangehenden Ausführungsformen eine zumindest teilweise Überdachung der Ablaufkante durch die Rinne ergibt. Eine entsprechende Ausgestaltung einer Rinne kann beispielsweise durch Umformverfahren, insbesondere durch ein Walzen oder Rollen mit geeigneten Werkzeugen, erreicht werden. In einer weiteren Ausführungsform, der ein offenes Hohlprofil des Querholmes bzw. des Querprofils zugrundeliegt, weist das offene Hohlprofil einen Innenraum und einen der Laderaumtür in Verschlußposition zugewandten Öffnungsquerschnitt bzw. Durchbruch auf, durch welchen sich die Ablaufkante in Verschlußposition hindurch erstreckt, wobei die Rinne in dem Innenraum ausgebildet ist. Ein derartiges Hohlprofil kann einerseits durch eine vorzugsweise spanende Nachbearbeitung eines als Halbzeug gegebenen geschlossenen Hohlprofils erhalten werden, andererseits kann auch auf eine Vielzahl von fertigen offenen Hohlprofilen zurückgegriffen werden oder auch diese geeignet nachbearbeitet. Bevorzugt ist, daß der Querholm und/oder das Querprofil aus einem Abkantprofil gebildet sind, die in einer großen Vielfalt von Querschnittsprofilen preiswert zur Verfügung stehen. Insbesondere ist daran gedacht, daß der Querholm und/oder das Querprofil aus einem Werkstoff auf Aluminium-Basis oder aus Stahl hergestellt sind. In einer zweckmäßigen Ausgestaltung weist die Rinne eine untere Begrenzungswand auf, die einen der Laderaumtür in Verschlußposition zugewandten erhabenen Randbereich aufweist. Es wird dadurch vorteilhaft erreicht, daß über den der Rinne in Verschlußposition zugewandten Rand der Ablaufkante hinaus in die Rinne eindringende Feuchtigkeit, beispielsweise in der Luft in feinster Form enthaltene Feuchtigkeit oder aufgewirbeltes Spritzwasser, das sich auf der unteren Begrenzungswand der Rinne ansammelt, durch den erhabenen Randbereich von der Laderaumtür abgehalten wird. Bevorzugt ist vorgesehen, daß für die auf der unteren Begrenzungswand sich ansammelnde Feuchtigkeit in Längsrichtung der Rinne eine Abflußmöglichkeit besteht, so daß der Flüssigkeitspegel in keinem Fall die Oberkante des erhabenen Randbereiches erreicht. Es wird dadurch sichergestellt, daß keine Feuchtigkeit in den unterhalb der Ablaufkante liegenden Spalt zwischen der Gegenwandung der Querholmes bzw. des Querprofils und der Innenwandung der Laderaumtür gelangen kann. Eine Abflußmöglichkeit für die Feuchtigkeit kann beispielsweise durch Ablauföffnungen bzw. -leitungen gegeben sein, die an den seitlichen Stirnflächen der Rinne vorgesehen sind. Eine entsprechende Schutzwirkung kann auch dadurch erreicht werden, daß die untere Begrenzungswand einen ebenen Wandbereich aufweist, der in Richtung auf den der Laderaumtür in Verschlußposition zugewandten Rand ansteigend ausgebildet ist. Entsprechend besteht auch die Möglichkeit, daß die Rinne eine obere Begrenzungswand aufweist, die einen der Laderaumtür in Verschlußposition zugewandten tieferliegenden Randbereich aufweist, bzw. daß die obere Begrenzungswand einen Wandbereich aufweist, der in Richtung auf den der Laderaumtür in Verschlußposition zugewandten Rand abfallend ausgebildet ist. Dabei können Rinnen zur Anwendung kommen, die hinsichtlich einer im Einbauzustand horizontalen Mittenebene einen symmetrischen Querschnitt aufweisen, auch unsymmetrische Querschnitte zeigen jedoch die zuvorgenannten gebrauchstechnischen Vorteile. Bei einer zweckmäßigen Gestaltung sind die obere und untere Begrenzungswand der Rinne an den von der Laderaumtür in Verschlußposition abgewandten Rändern mittels einer Verbindungswand verbunden. Dies kann sowohl in Verbindung mit einem geschlossenen Hohlprofil als auch grundsätzlich bei einem offenen Hohlprofil von Vorteil sein, da die Abmessungen der Ablaufkante in der Weise auf die Querschnittform der Rinne abgestimmt werden können, daß sich in Verschlußposition gerade eine bezüglich der Dichtwirkung bevorzugte Position des der Rinne bzw. der Verbindungswand der Rinne zugerichteten Randes der Ablaufkante relativ zu der Verbindungswand einstellen läßt. Im Querschnitt kann dabei die Länge der Ablaufkante z.B. so auf die Tiefe der Rinne abgestimmt sein, daß sich in Verschlußposition gerade ein geringer Abstand von wenigen Millimetern oder sogar von wenigen Zehntel Millimetern zwischen dem der Zwischenwand zugewandten Rand der Ablaufkante und der Zwischenwand einstellt, so daß insgesamt eine hoch wirksame und dennoch berührungsfreie und dadurch auch verschleißfreie Labyrinthdichtung gegeben ist. Obwohl bereits bei einer derartigen Ausführung in Verbindung mit einer in Richtung der Laderaumtür ansteigenden unteren Begrenzungswand bzw. in Verbindung mit einem ihr zugewandten erhabenen Randbereich der unteren Begrenzungswand eine wirksame Abdichtung gegeben ist, kann eine noch darüber hinausgehende Dichtfunktion durch eine im Querschnitt verlängerte Ablaufkante bewerkstelligt sein, so daß der der Verbindungswand zuweisende Rand der Ablaufkante in Verschlußposition gegen die Verbindungswand stößt. Bei einer entsprechenden Ausgestaltung ist bereits eine vollständige Redundanz der Dichtwirkung erreicht. Alternativ oder kombinativ kann auch eine entsprechende Abstimmung des Abstandes zwischen der Oberseite der Ablaufkante und der Unterseite der oberen Begrenzungswand der Rinne bei der Ausgestaltung der Labyrinthdichtung zu einer Verbesserung der Dichtwirkung beitragen. Sofern sich in Verschlußposition ein Kontakt zwischen der Ablaufkante und einer Wandung der Rinne ergibt, empfiehlt sich eine Ablaufkante mit einer hohen Bauteilnachgiebigkeit und/oder mit einer hohen Werkstoffnachgiebigkeit, so daß Beschädigungen weitgehend vermieden und somit eine praktisch ebenfalls wartungsfreie Dichtung geschaffen werden. In weiterer Einzelheit besteht die Möglichkeit, daß die die Rinne begrenzenden Wandabschnitte des Querholmes bzw. des Querprofils zumindest annähernd gleiche Wandstärken aufweisen. In einer weiter bevorzugten Ausgestaltung ist vorgesehen, daß in eine Unterseite der Ablaufkante im Bereich des der Laderaumtür abgewandten Randes der Ablaufkante eine Nut, insbesondere eine Nut mit einem Rechteckquerschnitt, eingeformt ist, welche Nut sich in Längserstreckung parallel zu dem Rand erstreckt. Auf diese Weise ist an dem vorbezeichneten Rand eine Abtropfkante gebildet, so daß über den der Rinne zugewandten Rand der Ablaufkante an deren Unterseite gelangende Feuchtigkeit dort nicht in Richtung Laderaumtür geleitet werden kann, sondern durch die Nut hieran gehindert wird und von der Abtropfkante in die Rinne hineintropft, um von dort abgeleitet zu werden.

Bezüglich sämtlicher der bisher beschriebenen Ausführungsformen ist weiter bevorzugt, daß die Laderaumtür eine dem Laderaum in Verschlußposition zugewandte Innenwandung aufweist, wobei der der Laderaumtür abgewandte, in Verschlußposition in die Rinne hineinragende Rand der Ablaufkante in einer senkrechten Projektion über die Innenwandung hinausragt. In weiterer Einzelheit kann der Dichtung an der Laderaumtür ein Dichtungselement mit einer Dichtwandung zur dichtenden Zusammenwirkung mit einem Gegenwandungsbereich, der sich unterhalb eines der Laderaumtür in Verschlußposition zugewandten Öffnungsquerschnittes der Rinne erstreckt, zugeordnet sein. Ein derartiges Dichtungselement kann als Strangprofil aus einem nachgiebigen Werkstoff, insbesondere aus Gummi oder aus Kunststoff, ausgebildet sein. Es besteht dabei auch die Möglichkeit, daß das Dichtungselement einen Hohlquerschnitt aufweist. Insbesondere kann vorgesehen sein, daß das Dichtungselement formschlüssig und/oder kraftschlüssig an der Innenwandung der Laderaumtür befestigt ist. Eine formschlüssige Verbindung kann dabei zweckmäßig durch einen T-förmigen oder schwalbenschwanzartigen Eingriff des Dichtungselementes in eine entsprechend angepaßte Ausnehmung in der Innenwandung der Laderaumtür vorgenommen sein. Eine kraftschlüssige Verbindung kann bspw. durch eine Klemmung des Dichtungselementes in einem Spalt oder einer anderweitigen Ausnehmung der Laderaumtür bewerkstelligt sein. Darüber hinaus ist auch eine stoffschlüssige Befestigung des Dichtungselementes, bspw. durch eine Klebstoffschicht, in Betracht zu ziehen. In weiterer Einzelheit kann vorgesehen sein, daß das Dichtungselement an der Laderaumtür unterhalb angrenzend zu einer Unterseite der Ablaufkante angeordnet ist. Ein besonders sicherer Halt des Dichtungselementes kann dadurch gewährleistet sein, daß das Dichtungselement im Grund eines aus der Unterseite der Ablaufkante und der Innenwandung der Laderaumtür gebildeten Zwickels angeordnet ist, so daß sich dabei eine zweiseitige Berandung bzw. Abstützung des Dichtungselementes ergibt. In jedem Fall ist durch ein derartiges Dichtungselement, das eine Dichtwandung aufweist, welche dichtend mit einem sich unterhalb des Öffnungsquerschnittes der Rinne erstrekkenden Gegenwandungsbereich zusammenwirkt, eine zusätzliche Dichtfunktion erreicht. Der Vorteil dieser aus Dichtungselement und dem vorgenannten Gegenwandungsbereich gebildeten Dichtung besteht darin, daß sie gerade eine bevorzugte Dichtwirkung hinsichtlich solcher Stoffe entfaltet, die in feinster Verteilung in der Luft enthalten sein können und die in der Luft aufgrund ihres geringen Gewichtes schweben können. Dies trifft bspw. auf die stets vorhandene Luftfeuchtigkeit bzw. auf Nebel, sowie auch auf verschiedene Gase, Staub und auf feine Sandkörnchen oder dergleichen zu. Eine bevorzugte Abdichtung wird durch die vorgenannte, aus Dichtungselement und Gegenwandungsbereich gebildete Dichtung auch für Licht- und Wärmestrahlung erreicht. Insgesamt ist demnach in vorteilhafter Weise eine solche Kombination erreicht, daß sich beide Systeme der Dichtung der Laderaumtür gegenüber dem Laderaumaufbau in idealer Weise ergänzen. Von der aus der Rinne und der Ablaufkante gebildeten Dichtung werden größere Partikel, wie etwa Regentropfen, Schnee oder auch ein Flüssigkeitsspiegel, die eine berührende Dichtung bei längerer Einwirkungsdauer durchdringen können, sowie zusätzlich auch größere Festkörper, bspw. Rollsplit, kleinere Steinchen oder dergleichen, wirksam abgehalten. Zusätzlich zu einer wirksamen Abdichtung gegenüber diesen Stoffen wird dadurch auch eine Schutzwirkung für die im Bedarfsfall außerdem vorgesehene, zuvor beschriebene, aus der Dichtwandung und dem Gegenwandungsbereich gebildete weitere Dichtpaarung erzielt. Diese letztgenannte, berührende Dichtpaarung entfaltet durch diesen Schutz eine besonders zuverlässige Dichtwirkung gerade hinsichtlich solcher obengenannter Stoffe und Strahlung, für die eine Abdichtung mittels der aus der Rinne und der Ablaufkante gebildeten Dichtpaarung nur mit einem vergleichsweise höheren Aufwand möglich ist. Insbesondere kann vorgesehen sein, daß das Dichtungselement gegenüber der Öffnungsposition der Laderaumtür in Verschlußposition durch die Anlage bzw. durch den Andruck gegen den Gegenwandungsbereich bezüglich des Querschnittes eine elastische Verformung erfährt.

Gemäß einer zweckmäßigen Weiterbildung ist vorgesehen, daß die Laderaumtür oberseitig ein Randprofil aufweist und daß die Ablaufkante einstückig an dem Randprofil angeformt ist. Bei dem vorgenannten Randprofil kann es sich vorzugsweise um ein Aluminium-Strangpreßprofil handeln, das auf den oberen Rand des Türblattes aufgesteckt und daran in geeigneter Weise befestigt ist, so daß durch das Randprofil eine obere Begrenzung der Laderaumtür gegeben ist. In weiterer Ausgestaltung besteht auch die Möglichkeit, daß an dem Randprofil dazu parallel verlaufend ein weiteres Profilteil befestigt ist und daß die Ablaufkante an diesem weiteren Profilteil einstückig ausgebildet ist. Es wird dadurch auf einfache Weise auch die Möglichkeit geschaffen, die Ablaufkante und das Randprofil aus unterschiedlichen, den jeweiligen Teilaufgaben angepaßten Werkstoffen zu wählen. So kann z.B. bei Verwendung eines Aluminium-Randprofils das weitere Profilteil aus einem Gummi- oder Kunststoffwerkstoff, der eine je nach Ausgestaltung der Ablaufkante gewünschte Flexibilität ermöglicht oder aber aus einem Werkstoff auf Aluminium-Basis bestehen. Die Befestigung des weiteren Profilteiles an dem Randprofil kann dabei kraftschlüssig und/oder formschlüssig und/oder stoffschlüssig ausgeführt sein. In einer alternativen Ausgestaltung kann die Ablaufkante auch an dem Dichtungselement oberhalb seiner Dichtwandung angeformt sein bzw. einstückig mit dem Dichtungselement ausgebildet sein. Es kann dabei vorteilhaft sein, wenn an das an der Innenwandung der Laderaumtür befestigte Dichtungselement zusätzlich ein im Querschnitt stegartiger Fortsatz angeformt ist, der einen Bereich der oberen Stirnseite der Laderaumtür überdeckt und an diesem gleichfalls kraftschlüssig und/oder formschlüssig und/oder stoffschlüssig befestigt ist.

Gemäß einer weiter bevorzugten Ausführungsform ist vorgesehen, daß in einer in Einbauposition oberen Wandung des Querholmes und/oder des Querprofiles eine zweite Rinne ausgebildet ist. Insbesondere kann dies an einem oben erläuterten geschlossenen Hohlprofil verwirklicht sein, wobei die Rinne von außen taschenartig in die Wandungen eingeformt sein kann. Es besteht dabei auch die Möglichkeit, daß der Querholm und/oder das Querprofil einen rechteckigen Querschnitt aufweist mit zwei zueinander senkrecht benachbarten, eine Kante einschließenden Wandungen, wobei an der ersten und an der zweiten Wandung jeweils in dem von der Kante abgewandten Randbereich eine Rinne ausgebildet ist. Darüber hinaus sind natürlich auch abweichende Querschnittsformen des Querholmes und/oder des Querprofiles denkbar, bspw. trapezförmige, dreieckige, mehreckige oder runde Querschnitte. Gemäß einer weiter bevorzugten Ausgestaltung kann vorgesehen sein, daß das Querprofil einen einseitig offenen Querschnittsbereich bildet, dessen Innenkontur an eine Außenkontur des Querholmes angepaßt ist. Dabei kann der einseitig offene Querschnittsbereich von einem Winkelprofil berandet sein, und an dem Querprofil können in dessen Längsrichtung verlaufende, zueinander parallel orientierte, in Einbaulage vertikal beabstandete Aufnahmenuten vorgesehen sein, in denen das Winkelprofil jeweils formschlüssig halterbar ist. Hierdurch wird vorteilhaft eine Höhenverstellbarkeit des Winkelprofils erreicht, so daß eine flexible Anpassung der Innenkontur der Querprofils an die Außenkonturen verschiedener Querholme und dadurch eine schnelle und belastbare Befestigung des Querprofils an dem Querholm ermöglicht wird. Die Befestigung kann bspw. in der Weise erfolgen, daß das Querprofil mit dem einseitig offenen Querschnittsbereich auf den Querholm aufgeschoben wird, so daß der dazu vorgesehene Öffnungsquerschnitt der in dem Querprofil ausgebildeten Rinne der Laderaumtür in Verschlußposition zugewandt ist. Das Querprofil kann in dieser Anordnung durch die im Fahrzeugbau gebräuchlichen Verbindungstechniken, bspw. durch Schrauben, durch Nieten, durch Schweißen, durch Kleben oder auf andere zweckmäßige Weise wahlweise fest oder wieder lösbar an dem Querholm befestigt sein. Es besteht dadurch auf einfache und wirtschaftliche Weise die Möglichkeit, bereits vorhandene Laderaumaufbauten mit darin integrierten herkömmlichen Querholmen durch einen Einbau eines entsprechenden Querprofils mit einer Rinne nachzurüsten, so daß sich in Verbindung mit einer türseitigen Ablaufkante die erfindungsgemäßen Vorteile ergeben.

In einer weiteren bevorzugten Ausgestaltung des Laderaumaufbaues besteht die Möglichkeit, daß an dem Querholm oder an dem Querprofil oberseitig eine Profilleiste befestigt ist, welche einen in Einbaulage senkrechten, in Längsrichtung des Querholmes bzw. des Querprofils verlaufenden Steg aufweist, dessen oberer Randbereich in Vorwärts-Fahrtrichtung des Lastkraftwagens abgekrümmt ist. Vorteilhaft wird dadurch insbesondere beim Anfahren des Lastkraftwagens nach längerem Stillstand ein Übertreten von angesammelter Feuchtigkeit, Schnee oder dergleichen, über die hintere Dachkante des Laderaumaufbaues verhindert. Der senkrecht verlaufende Steg kann in der Weise weitergebildet sein, daß daran an einer dem Laderaum abgewandten senkrechten Wandung eine Leiste angeformt ist, die zu ihrem in ihrer Längsrichtung verlaufenden, freien Randbereich hin ansteigend ausgebildet ist. Insbesondere kann vorgesehen sein, daß der von dem senkrechten Steg abgewandte Rand der Leiste in einer senkrechten Projektion über die Außenwandung der Laderaumtür hervorsteht, so daß insgesamt eine Überdachung der Laderaumtür sowie ggf. deren Scharnier- und Verriegelungselemente gegeben ist. Durch eine derartige, die Laderaumtür überdachende Leiste wird eine nach oben hin offene Abflußrinne gebildet, in der die von oben auftreffende Feuchtigkeit abgeleitet wird. Der senkrecht verlaufende Steg und die daran angeformte Leiste kann bspw. aus einem Kunststoff- oder Gummiwerkstoff, aber auch z.B. aus Aluminium hergestellt sein und vorzugsweise formschlüssig an einer in Einbaulage oberen Wandung des Querholmes und/oder des Querprofils befestigt sein.

Ergänzend zu den vorangehenden Ausführungen besteht auch die Möglichkeit, daß der Querholm und/oder das Querprofil aus einem Kunststoffmaterial, insbesondere aus einem Hartkunststoff, hergestellt sind.

Die Erfindung wird nachfolgend anhand der beigefügten Zeichnungen, in denen bevorzugte Ausführungsbeispiele dargestellt sind, näher erläutert. Die Zeichnungen zeigen:
- Fig. 1: eine rückwärtige Draufsicht auf einen erfindungsgemäßen Laderaumaufbau mit einer zweiflügeligen Laderaumtür;
- Fig. 2: einen Schnitt gemäß der Linie II-II in Fig. 1 mit einem bezüglich der Querschnittsform liegenden Querholm;
- Fig. 3: eine Schnittansicht gemäß Fig. 2, jedoch mit einem bezüglich der Querschnittsform stehenden Querholm;
- Fig. 4: eine Schnittansicht gemäß Fig. 2, jedoch mit einer bezüglich des Querschnittes angewandelten Rinnenform;
- Fig. 5: eine Schnittansicht einer weiteren Ausführungsform mit einer an einem Profilteil angeformten Ablaufkante;
- Fig. 6: eine Schnittansicht einer weiteren Ausführungsform mit einer an ein Dichtungselement angeformten Ablaufkante;
- Fig. 7: eine Schnittansicht einer weiteren Ausführungsform, bei der die Rinne in einem an einem Querholm befestigten Querprofil aufgenommen ist;
- Fig. 8: eine Schnittansicht durch eine weitere Ausführungsform, bei der die Rinne an einem Querprofil mit S-förmigen Querschnitt aufgenommen ist;
- Fig. 9: eine Schnittansicht durch eine weitere Ausführungsform, bei der die Rinne in einem abweichenden Querprofil mit offenem Querschnitt aufgenommen ist;
- Fig. 10: eine Schnittansicht durch eine weitere Ausführungsform, bei der die Rinne in einem unterseitig des Querholmes befestigten Querprofil aufgenommen ist;
- Fig. 11: eine Schnittansicht durch eine weitere Ausführungsform, bei der die Rinne in einem die Laderaumtür überdachenden Querprofil aufgenommen ist.

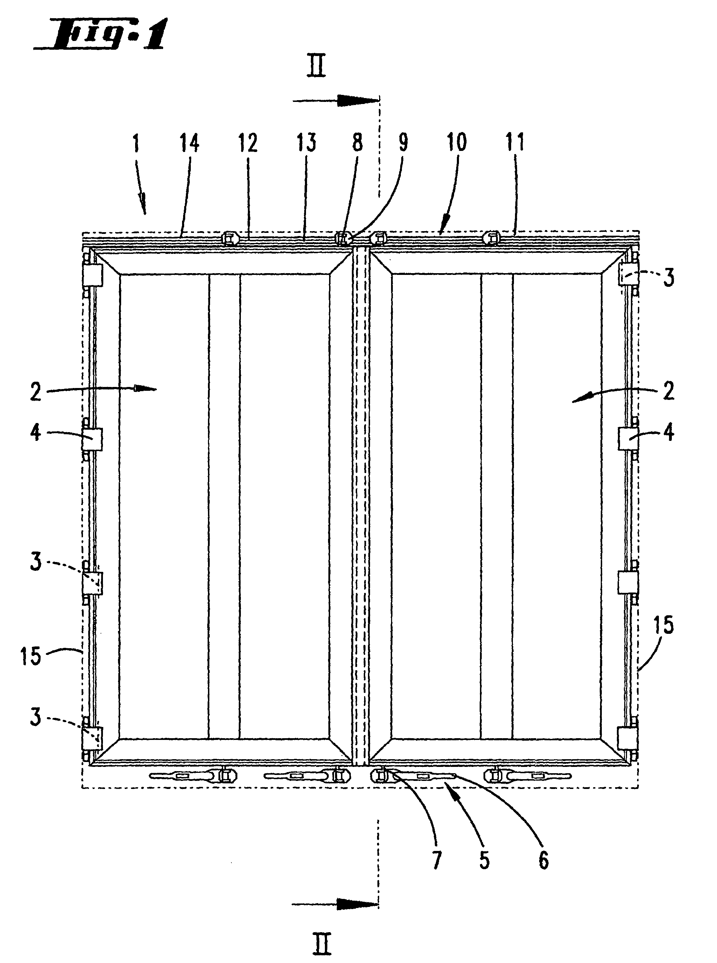

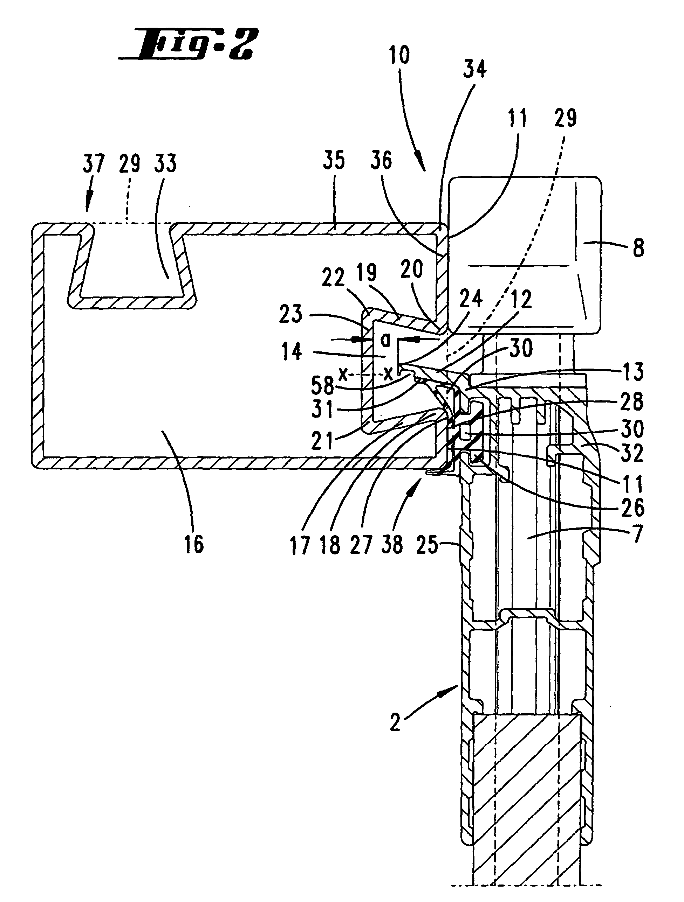

In Figur 1 ist in einer rückwärtigen Draufsicht ein erfindungsgemäßer Laderaumaufbau 1 eines Lastkraftwagens dargestellt. Der Laderaumaufbau 1 weist an der rückseitigen Stirnseite zweiflügelig angeordnete Laderaumtüren 2 auf. Jede Laderaumtür ist durch eine senkrechte Drehachse 3 mittels Scharnieren 4 schwenkbar an dem Laderaumaufbau 1 gehaltert. Weiterhin sind Verriegelungseinrichtungen 5 zur Verriegelung der Laderaumtüren 2 in deren Verschlußposition vorgesehen. Die Verriegelungseinrichtungen 5 weisen Betätigungselemente 6 auf, weiterhin im gezeigten Beispiel als Drehstangen ausgebildete Übertragungselemente 7 sowie daran befestigte Verriegelungselemente 8 und diese bei Verriegelung aufnehmende, an der rückwärtigen Wandung des Laderaumaufbaues befestigte Aufnahmen 9 auf. Jede der dargestellten Laderaumtüren 2 weist eine Dichtung 10 zur dichtenden Zusammenwirkung mit einer Gegenwandung 11 des Laderaumaufbaues 1 auf. Der Dichtung 10 ist eine Ablaufkante 12 zugeordnet (s. auch Fig. 2), die sich, ausgehend von einem oberen Randbereich 13 der Laderaumtür 2 in der dargestellten Verschlußposition in Richtung Laderaum in eine von der Gegenwandung 11 berandete, der Laderaumtür 2 in Verschlußposition zugewandte Rinne hinein erstreckt. Während es sich bei den in Figur 1 gezeigten Laderaumtüren 2 nach dem vorher Gesagten um die heckseitigen Laderaumtüren 2 eines erfindungsgemäßen Laderaumaufbaues 1 handelt, kann selbstverständlich auch vorgesehen sein, daß an den Seitenwänden 15 des Laderaumaufbaues 1 angeordnete seitliche Laderaumtüren auf die bisher und im nachfolgenden beschriebene Weise gegenüber dem übrigen Laderaumaufbau 1 abgedichtet sind.

In Figur 2 ist gemäß der Schnittlinie II-II in Figur 1 in weiterer Einzelheit dargestellt, daß sich die Ablaufkante 12 in dem gezeigten Ausführungsbeispiel ausgehend von dem oberen Randbereich 13 der Laderaumtür 2 ansteigend in Richtung Laderaum erstreckt. Wie aus der Kombination der Figuren 1 und 2 weiter erkennbar ist, erstreckt sich die Rinne 14 in Verschlußposition der Laderaumtür in ihrer Längsrichtung parallel zu der Laderaumtür 2. Der in Figur 2 gezeigte Laderaumaufbau weist außerdem einen Querholm 16 auf, in dem die Rinne 14 in einer der Laderaumtür 2 in Verschlußposition zugewandten Anordnung ausgebildet ist. Der Querholm 16 ist dabei, ohne daß dies näher dargestellt ist, mit seinen endseitigen Querschnittsflächen an den Innenseiten der Seitenwände 15 des Laderaumaufbaues 1 befestigt. Der Querholm 16 weist in dem in Figur 2 gezeigten Ausführungsbeispiel im Querschnitt ein geschlossenes Hohlprofil auf, wobei die Rinne 14 von außen in das geschossene Hohlprofil taschenartig eingeformt ist, so daß sie sich im Querschnitt von außen in das geschlossene Hohlprofil hinein erstreckt. Die Rinne weist eine untere Begrenzungswand 17 auf, die in Richtung auf den der Laderaumtür 2 in Verschlußposition zugewandten Rand 18 ansteigend ausgebildet ist. Weiterhin weist die Rinne 14 eine obere Begrenzungswand 19 auf, die in Richtung auf den der Laderaumtür in Verschlußposition zugewandten Rand 20 abfallend ausgebildet ist, so daß bezüglich einer horizontalen Mittenebene x-x eine im Querschnitt symmetrische Ausgestaltung der Rinne 14 gegeben ist. In weiterer Einzelheit ist dargestellt, daß die obere 19 und die untere 17 Begrenzungswand der Rinne 14 an den von der Laderaumtür 2 in Verschlußposition abgewandten Rändern 21, 22 mittels einer Verbindungswand 23 verbunden sind. Bei dem Ausführungsbeispiel der Figur 2 ergibt sich in der dargestellten Verschlußposition der Laderaumtür 2, daß der der Laderaumtür 2 abgewandte Rand 24 von der Verbindungswand 23 der Rinne 14 durch den Abstand a beabstandet ist, der hier zum leichteren Verständnis nicht maßstabgerecht vergrößert dargestellt ist, so daß durch die Kombination der Rinne mit der Ablaufkante 12 eine Spalt- bzw. Labyrinthdichtung verwirklicht ist. Wie weiter dargestellt ist, weist die Laderaumtür 2 eine dem Laderaum in Verschlußposition zugewandte Innenwandung 25 auf, wobei der der Laderaumtür 2 abgewandte Rand 24 der Ablaufkante 12 in einer senkrechten Projektion über die Innenwandung 25 deutlich hinausragt. Gemäß Figur 2 ist der Dichtung 10 weiterhin ein formschlüssig an der Innenwandung 25 der Laderaumtür 2 befestigtes Dichtungselement 26 mit einer Dichtwandung 27 zugeordnet zur dichtenden Zusammenwirkung der Dichtwandung 27 mit einem Gegenwandungsbereich 28, der sich unterhalb eines der Laderaumtür 2 in Verschlußposition zugewandten Öffnungsquerschnittes 29 der Rinne 14 erstreckt. Wie deutlich zu erkennen ist, ergibt sich in der gezeigten Anordnung eine Überdachung der Dichtfläche zwischen der Dichtwandung 27 und dem Gegenwandungsbereich 28 durch die in einer senkrechten Projektion über die Innenwandung 25 hinausstehende Ablaufkante 12. In dem in Figur 2 gezeigten Ausführungsbeispiel ist das Dichtungselement 26 als Strangprofil aus einem nachgiebigen Werkstoff, im konkreten Fall aus Gummi, ausgebildet und weist einen geschlossenen Hohlquerschnitt mit Hohlräumen 30 auf. Das Dichtungselement 26 ist im dargestellten Beispiel formschlüssig an der Innenwandung 25 der Laderaumtür 2 befestigt, im einzelnen ist dies durch den Eingriff eines T-förmigen Fortsatzes des Dichtungselementes 26 in einer entsprechend geometrisch angepaßte Ausnehmung in der Innenwandung 25 erreicht. Gemäß Figur 2 ist weiterhin vorgesehen, daß die Ablaufkante 12 eine Unterseite 31 aufweist und daß das Dichtungselement 26 zu der Unterseite 31 unterhalb angrenzend angeordnet ist. Auf diese Weise ergibt sich eine zweiseitige Anlage bzw. Abstützung des Dichtungselementes 26 gegenüber der Ablaufkante 12 und der Innenwandung 25. Im gezeigten Ausführungsbeispiel ist darüber hinaus vorgesehen, daß in die Unterseite 31 der Ablaufkante 12 im Bereich des der Laderaumtür 2 abgewandten Randes 24 eine Nut 58 mit einem Rechteckquerschnitt eingeformt ist, welcher sich in Längsrichtung parallel zu dem Rand 24 erstreckt. In weiterer Einzelheit ist vorgesehen, daß die Laderaumtür 2 oberseitig ein Randprofil 32, im gezeigten Beispiel ein Aluminium-Strangpreßprofil, aufweist und daß die Ablaufkante 12 einstückig an dem Randprofil 32 angeformt ist. Der Figur 2 ist weiterhin zu entnehmen, daß der Querholm in einer in Einbauposition oberen Wandung eine zweite Rinne 33 aufweist. Diese ist im gezeigten Ausführungsbeispiel mit gleicher Querschnittsform wie die Rinne 14, bei entsprechend um 90° verdrehter Anordnung, ausgeführt. Die gezeigte Rinne 33 kann als zusätzlicher Sammelbehälter bzw. Abfluß für Feuchtigkeit, bspw. Regen oder Schnee, dienen. Im Bedarfsfall kann sie jedoch auch durch einen zeichnerisch nicht dargestellten Keder, d.h. durch eine den Öffnungsquerschnitt 29 der Rinne 33 verschließende Profilleiste abgedeckt werden. Insgesamt weist der Querholm 16 einen rechteckigen Querschnitt auf mit zwei zueinander senkrecht benachbarten, eine Kante 34 einschließenden Wandungen 35, 36, wobei an der ersten und an der zweiten Wandung 35, 36 jeweils in dem von der Kante 34 abgewandten Randbereich 37, 38 eine Rinne 33, 14 ausgebildet ist.

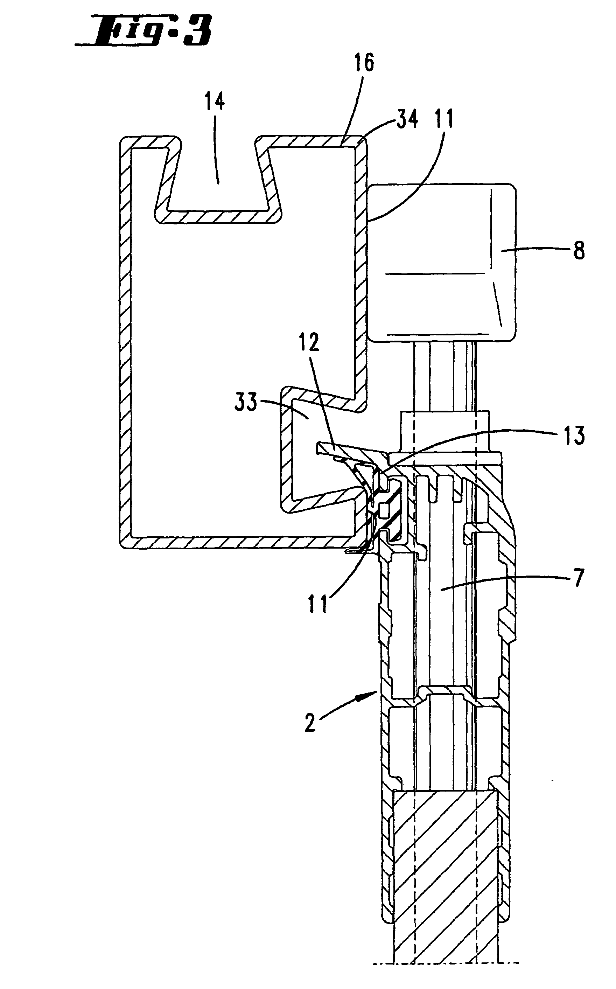

Die in Figur 3 dargestellte Ausführungsform unterscheidet sich dadurch von der in Figur 2 gezeigten, daß der Querholm 16 bezüglich seiner rechteckigen Querschnittsform nicht in einer liegenden, sondern in einer stehenden Anordnung eingebaut ist. Es kann dazu ein Querholm 16 mit dem auch in Figur 2 gezeigten identischen Querschnitt vorgesehen sein, da der in Figur 2 gezeigte Querholm 16 durch geeignete Drehbewegungen in die in Figur 3 dargestellte Lage überführt werden kann. Wie daraus zu erkennen ist, ist darin anstelle der Rinne 14 die Rinne 33 der Laderaumtür 2 in Verschlußposition zugewandt. Entsprechend erstreckt sich die Ablaufkante 12 ausgehend von einem oberen Randbereich 13 der Laderaum 2 in Verschlußposition ansteigend in Richtung Laderaum in die Rinne 33 hinein. Dabei ist die die Rinne 33 berandende Gegenwandung 11, gegen welche die Laderaumtür 2 abgedichtet ist, von der Wandung 35 (einschließlich des Randbereiches 37) des Querholmes 16 bildet. Gegenüber der in Figur 2 gezeigten Variante ergibt sich in Figur 3 die Möglichkeit einer vollflächigen Auflage bzw. Befestigung der Verriegelungselemente 8 an der Gegenwandung 11. Zur näheren diesbezüglichen Ausgestaltung sowie zu weiteren, den Aufbau der Laderaumtür 2 betreffenden Einzelheiten wird auf die bereits zum Stand der Technik genannte EP 0 698 515 A2 verwiesen, die in die vorliegende Anmeldung vollinhaltlich einbezogen wird, auch zu dem Zweck, Merkmale in Ansprüche der vorliegenden Anmeldung aufzunehmen. In Figur 3 sowie in den nachfolgenden Figuren sind zur besseren Übersicht nur solche Bezugszeichen eingetragen, die zur Erläuterung von Abweichungen gegenüber dem in Figur 2 gezeigten Ausführungsbeispiel hilfreich sind.

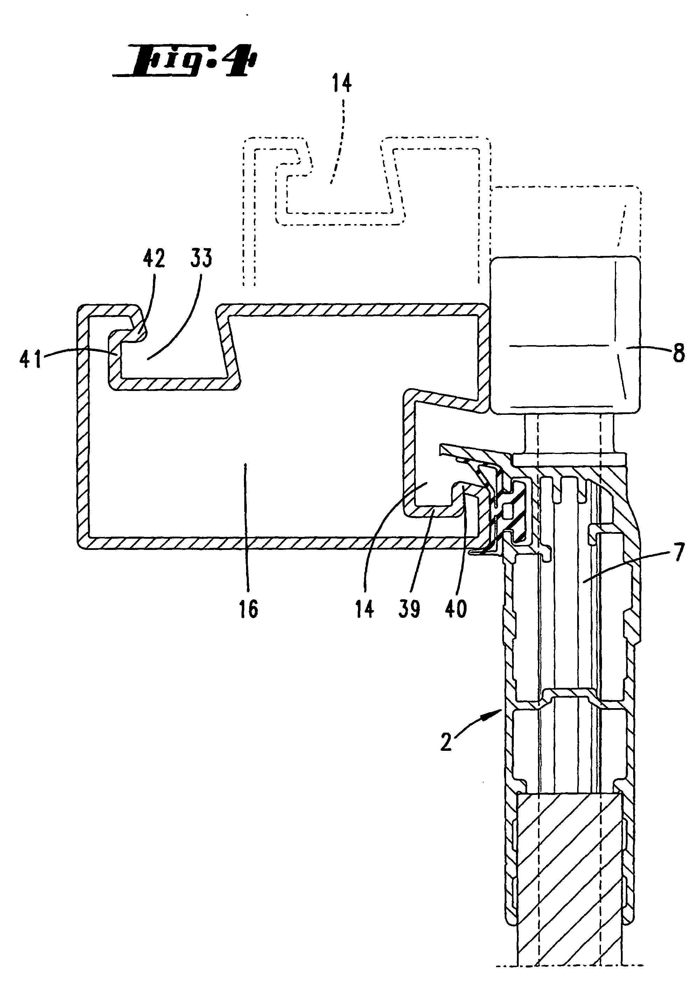

In Figur 4 ist ein weiteres Ausführungsbeispiel eines erfindungsgemäßen Laderaumaufbaues in einem entsprechenden Teilschnitt dargestellt. Im Unterschied zu der in Figur 2 dargestellten Ausführungsform ist in Figur 4 eine abweichende Querschnittsform der Rinnen 14 und 33 gewählt. Bezüglich der Rinne 14 ist vorgesehen, daß diese eine untere Begrenzungswand 39 aufweist, die einen der Laderaumtür 2 in Verschlußposition zugewandten erhabenen Randbereich 40 aufweist. Die Rinne 33 weist bei einer entsprechend gedrehten Ausrichtung eine gleichartige Querschnittsform auf. Wie dies in gestrichelten Linien angedeutet ist, besteht dadurch die Möglichkeit, daß der Querholm 16 alternativ auch in einer bezüglich seines Rechteckquerschnittes stehenden Anordnung eingebaut ist, wobei in dieser Anordnung die Rinne 33 an die Stelle der Rinne 14, die Wandung 41 an die Stelle der unteren Begrenzungswand 39 und der Randbereich 42 an die Stelle des erhabenen Randbereiches 40 tritt.

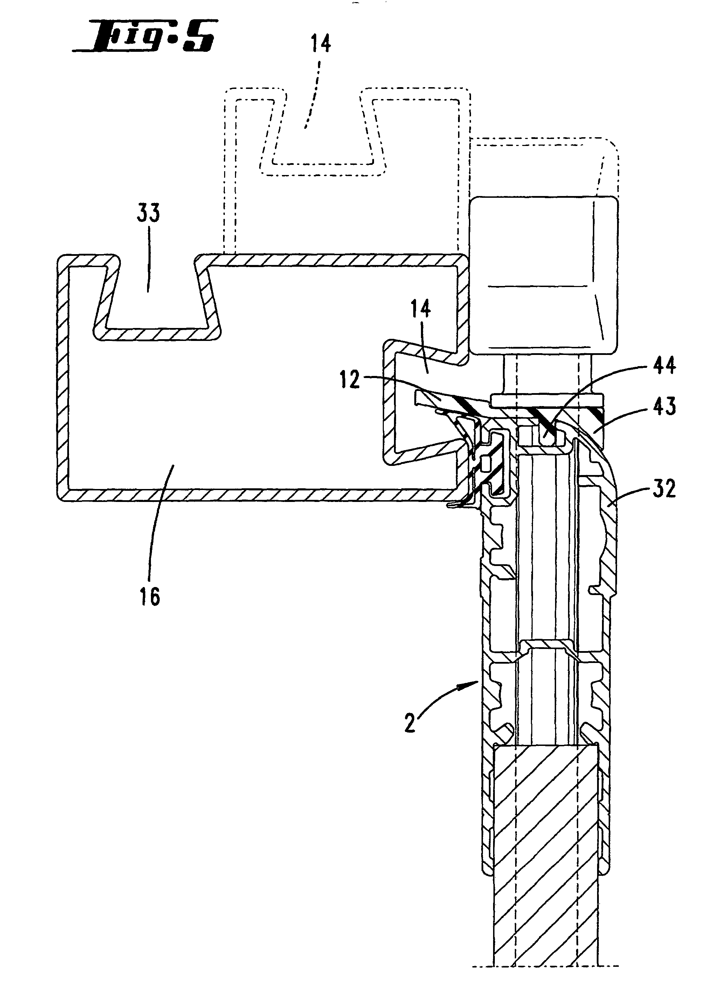

In Figur 5 ist eine weitere zweckmäßige Ausführungsform eines erfindungsgemäßen Laderaumaufbaues in einem entsprechenden Teilschnitt dargestellt. Danach ist vorgesehen, daß an dem Randprofil 32 der Laderaumtür 2 dazu parallel verlaufend ein Profilteil 43 befestigt ist und daß die Ablaufkante 12 an dem Profilteil 43 ausgebildet, im gezeigten Beispiel einstückig angeformt, ist. Wie in weiterer Einzelheit dargestellt ist, ist das Profilteil 43 an der oberen Stirnseite des Randprofils 32 befestigt, indem ein Steg 44 des Randprofils 43 in eine ihm zugewandte Ausnehmung in dem Randprofil 32 eingepreßt ist. Anhand der unterschiedlichen Schraffuren ist deutlich zu erkennen, daß das Profilteil 43 mit der daran angeformten Ablaufkante 12 aus einem anderen Material als das Randprofil 32 hergestellt ist. Während es sich in dem gezeigten Beispiel bei dem Randprofil 32 um ein Aluminium-Strangpreßprofil handelt, ist das Profilteil 43 mit der Ablaufkante 12 aus einem flexiblen Kunststoffmaterial hergestellt.

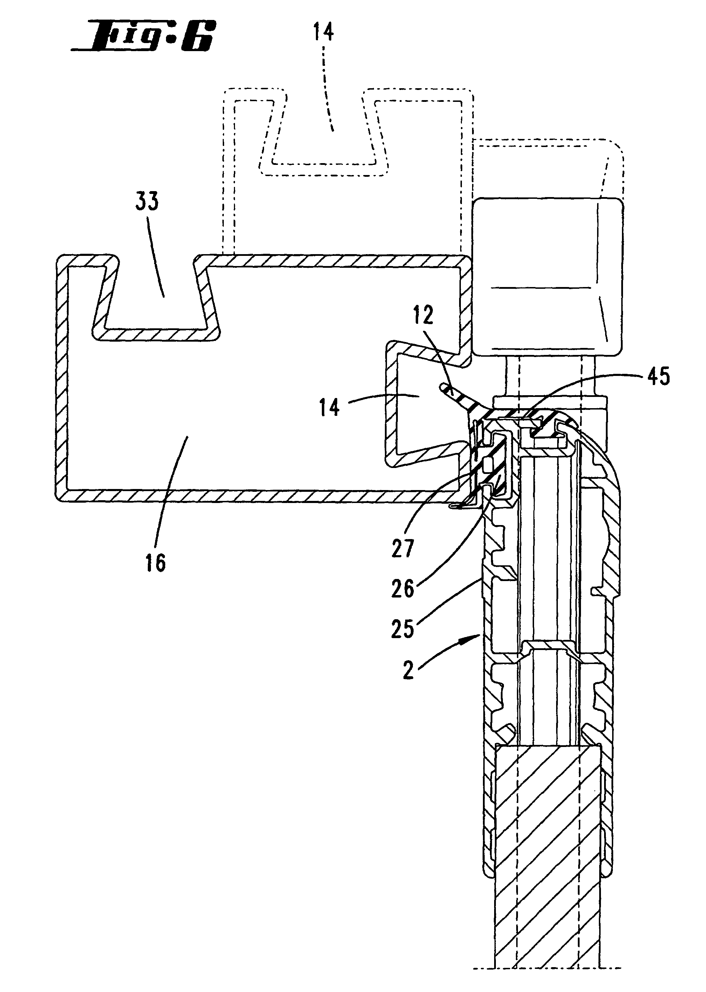

In Figur 6 ist eine alternative Ausführungsform dargestellt, bei der die Ablaufkante 12 oberhalb der Dichtwandung 27 des Dichtungselementes 26 einstückig mit dem Dichtungselement 26 ausgebildet ist. Im dargestellten Ausführungsbeispiel ist das Dichtungselement 26 mit der Ablaufkante 12 aus einem elastischen Gummimaterial hergestellt. Wie weiter dargestellt ist, ist das Dichtungselement 26 sowohl an der Innenwandung 25, als auch an der oberen Stirnwandung 45 formschlüssig befestigt. Dies ist jeweils durch einen formschlüssigen Eingriff eines an dem Dichtungselement 26 angeformten T-förmigen Fortsatzes in eine geometrisch angepaßte Ausnehmung in den jeweiligen Flächen der Laderaumtür 2 erreicht.

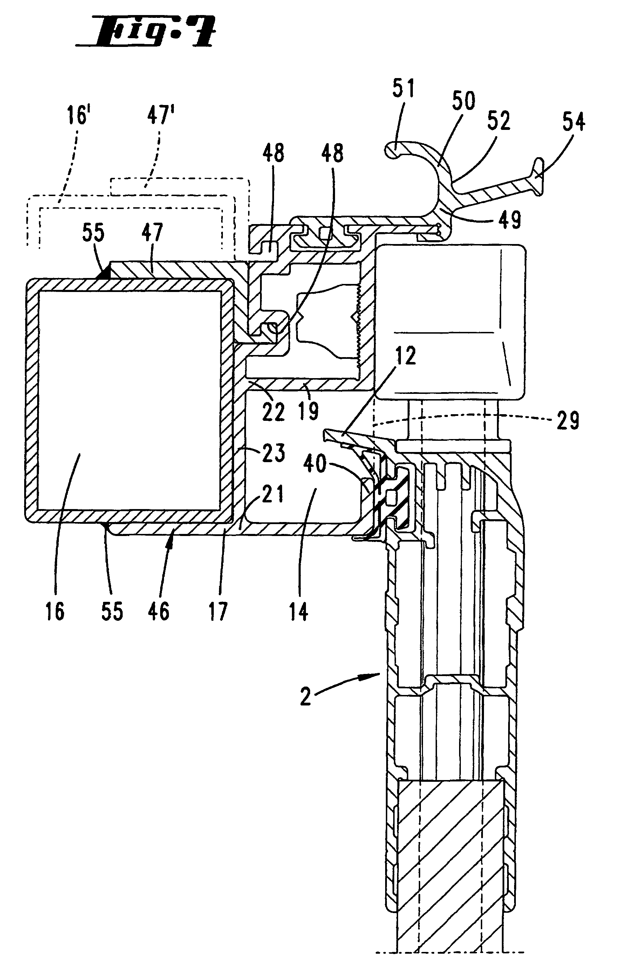

In Figur 7 ist eine weitere bevorzugte Ausführungsform eines Laderaumaufbaues nach der Erfindung in einem Teilschnitt gezeigt, wobei der Laderaumaufbau 1 ein mit dem Querholm 16 verbundenes Querprofil 46 aufweist und die Rinne 14 in dem Querprofil 46 ausgebildet ist. Dies ist in dem gezeigten Ausführungsbeispiel der Figur 7 dadurch erreicht, daß das Querprofil 46 in seinem in Einbauposition unteren Querschnittsbereich ein offenes Hohlprofil aufweist. Die Rinne weist darin eine untere Begrenzungswand 17 auf, die einen der Laderaumtür 2 in Verschlußposition zugewandten erhabenen Randbereich 40 besitzt. Die Rinne 14 wird außerdem von einer oberen Begrenzungswand 19 begrenzt. Weiter ist vorgesehen, daß die obere und die untere Begrenzungswand 17, 19 der Rinne 14 an den von der Laderaumtür 2 in Verschlußposition abgewandten Rändern 21, 22 mittels einer Verbindungswand 23 verbunden sind. Aus dem vorher Gesagten wird deutlich, daß das offene Hohlprofil im unteren Bereich des Querprofiles 46 einen Innenraum aufweist und daß die Rinne in dem Innenraum ausgebildet ist. Das offene Hohlprofil weist außerdem einen der Laderaumtür 2 in Verschlußposition zugewandten Öffnungsquerschnitt 29 bzw. Durchbruch auf, durch welchen sich die Ablaufkante 12 in Verschlußposition erstreckt. In weiterer Einzelheit weist das Querprofil 46 einen in Figur 7 zum linken Zeichnungsrand hin einseitig offenen Querschnittsbereich auf, dessen Innenkontur an die Außenkontur des Querholmes 16 angepaßt ist. Dabei ist vorgesehen, daß der einseitig offene Querschnittsbereich von einem Winkelprofil 47 berandet ist und daß an der Querprofil 46 in dessen Längsrichtung verlaufende, zueinander parallel orientierte vertikal beabstandete Aufnahmenuten 48 vorgesehen sind, in denen das Winkelprofil 47 jeweils formschlüssig halterbar ist. Dabei ist in Figur 7 mit durchgezogenen Linien eine geometrische Anpassung des einseitig offenen Querschnittsbereiches an einen Querholm 16 mit näherungsweise quadratischem Querschnitt erreicht, indem das Winkelprofil 47 in die untere von zwei vorgesehen Aufnahmenuten 48 eingesetzt bzw. darin befestigt ist. Mit unterbrochenen Linien ist eine alternative Anordnung angedeutet, bei der das Winkelprofil 47' in der oberen der beiden Aufnahmenuten 48 eingesetzt ist, so daß eine geometrische Anpassung an einen Querholm 16 mit rechteckigem Querschnitt in einer bezüglich des Rechteckquerschnittes stehenden Anordnung geschaffen ist. Bei der Ausführungsform gemäß Figur 7 ist an dem Querprofil 46 zudem oberseitig eine Profilleiste 49 befestigt, welche einen in Einbaulage senkrechten, in Längsrichtung des Querholmes 16 bzw. des Querprofils 46 verlaufenden Steg 50 aufweist, dessen oberer Randbereich 51 in Vorwärts-Fahrtrichtung des Lastkraftwagens abgekrümmt ist. Im übrigen ist an den senkrecht verlaufenden Steg 50 an einer der dem Laderaum abgewandten senkrechten Wandung 52 eine Leiste 53 angeformt, die zu ihrem in ihrer Längsrichtung verlaufenden, freien Randbereich 54 ansteigend ausgebildet ist. Wie weiter dargestellt ist, ist das Querprofil 46 und das Winkelprofil 47 mit einer Schweißnaht 55 an dem Querholm 16 befestigt, wobei die Befestigung auch anderweitig realisiert sein kann, beispielsweise durch ein Vernieten, Verschrauben, Verkleben oder dergleichen.

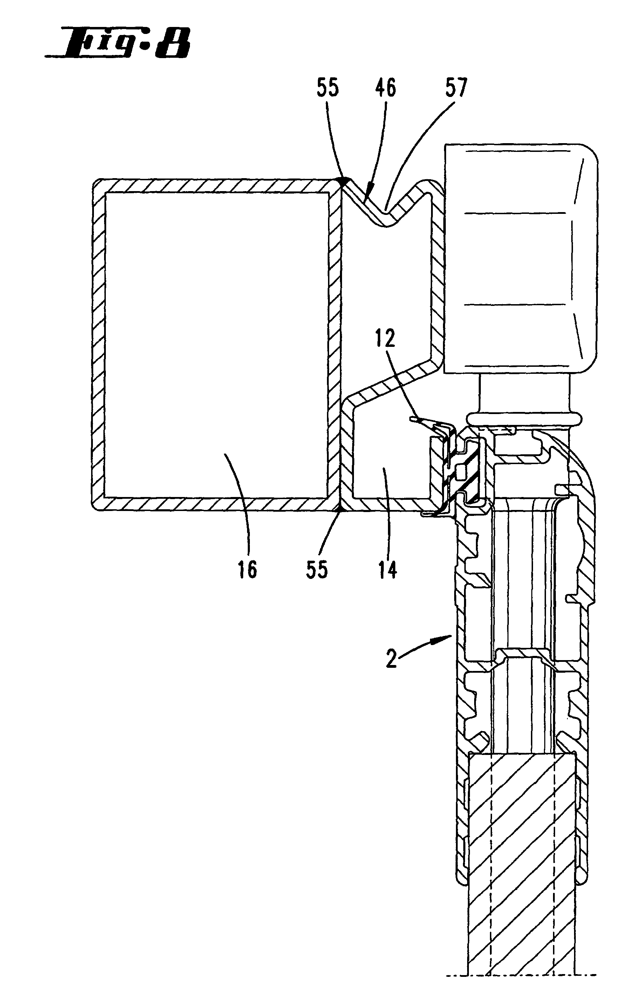

Die Figur 8 zeigt eine weitere Ausführungsform eines erfindungsgemäßen Laderaumaufbaues in einem Teilschnitt, wobei die Rinne in einem Querprofil 46, das als ein im Querschnitt S-förmiges Hohlprofil ausgebildet ist, aufgenommen ist. Das Querprofil 46 ist im dargestellten Beispiel ein Abkantprofil, das in seinem oberen Wandbereich eine Formgebung aufweist, durch die eine V-förmige Sammel- und Abführrinne 57 für Feuchtigkeit, wie etwa Regenwasser und Schnee, gebildet ist. Das Querprofil 46 ist an zwei entfernt voneinander liegenden Wandbereichen mit einer Schweißnaht 55 mit dem Querholm 16 verbunden.

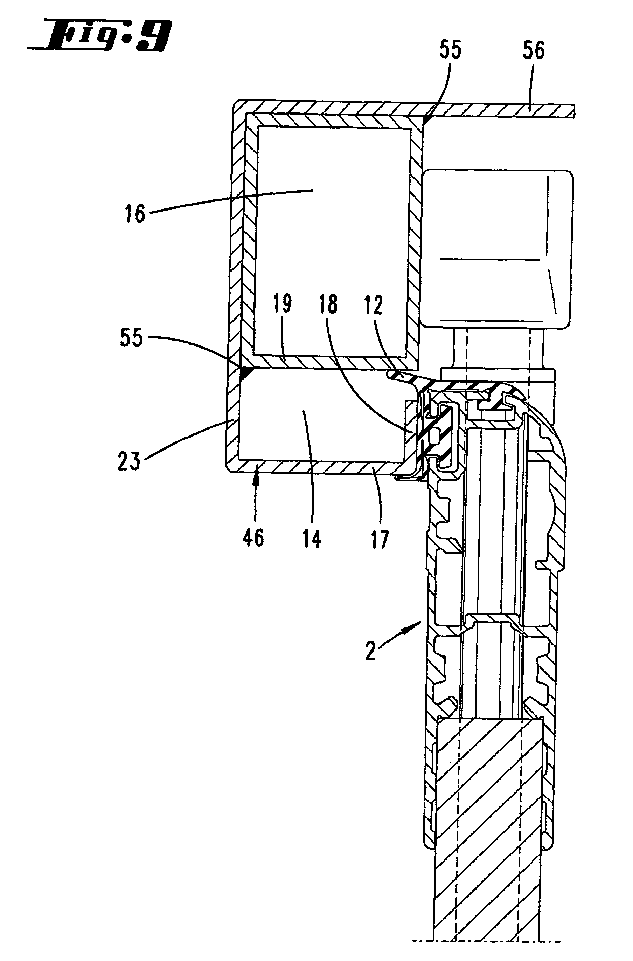

In Figur 9 ist eine weitere zweckmäßige Ausführungsform des Laderaumaufbaues gezeigt, bei der die Rinne 14 im unteren Querschnittsbereich eines Querprofils 46 gebildet ist, wobei als Querprofil 46 ein offenes Hohlprofil vorgesehen ist. Während die untere Begrenzungswand 17 mit dem erhabenen Randbereich 18 und die Verbindungswand 23 von dem Querprofil 46 gebildet sind, ist die obere Begrenzungswand 19 Bestandteil des Querholmes 16, welcher mit dem Querprofil 46 durch Schweißnähte 55 verbunden ist. Weiterhin ist vorgesehen, daß das Querprofil 46 in seinem oberen Querschnittsbereich einen horizontal verlaufenden Endbereich 56 besitzt, durch welchen eine Überdachung der Laderaumtür 2 gegeben ist.

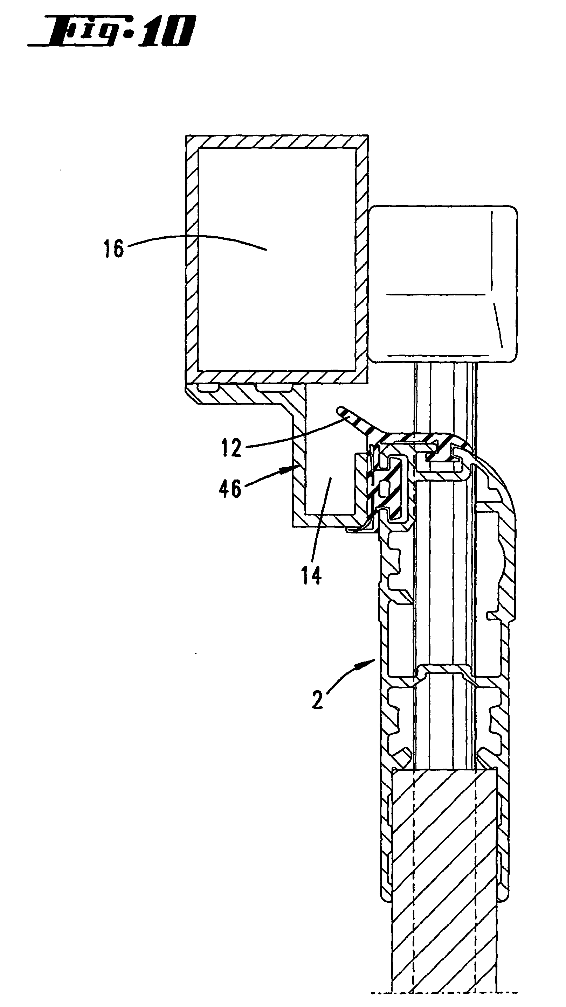

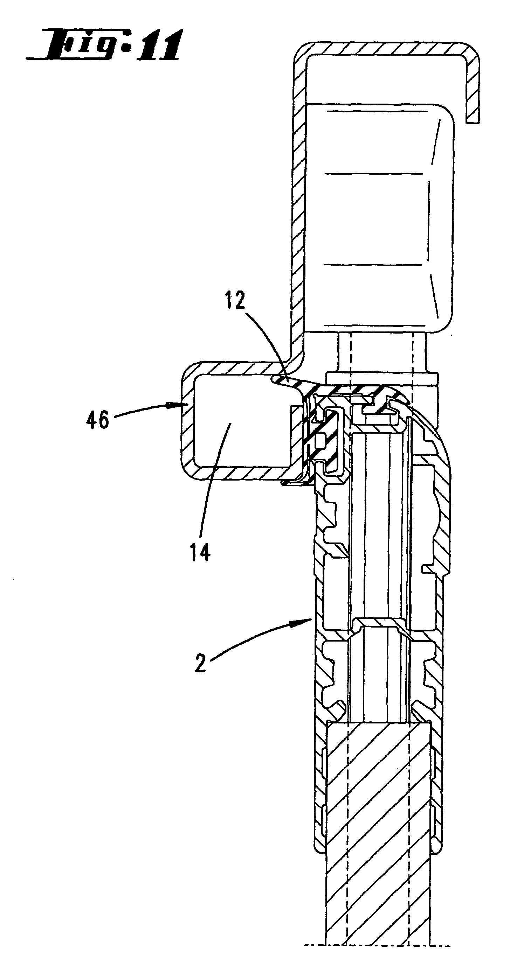

Die Figuren 10 und 11 zeigen weitere zweckmäßige Ausführungsformen des Laderaumaufbaues nach der Erfindung, wobei die Rinne 14 jeweils in Querprofilen 46 abweichender Querschnittsgestalt aufgenommen ist.

## Patentansprüche

1. Laderaumaufbau, insbesondere eines Lastkraftwagens, mit einer um eine senkrechte Drehachse schwenkbaren Laderaumtür (2), die eine Dichtung (10) zur dichtenden Zusammenwirkung mit einer Gegenwandung (11) des Laderaumaufbaus (1) aufweist, **dadurch gekennzeichnet, dass** der Dichtung (10) eine Ablaufkante (12) zugeordnet ist, die sich ausgehend von einem oberen Randbereich (13) der Laderaumtür (1) in Verschlussposition in Richtung Laderaum in eine von der Gegenwandung (11) berandete, der Laderaumtür (2) in Verschlussposition zugewandte Rinne (14) hinein erstreckt.

2. Laderaumaufbau nach Anspruch 1, **dadurch gekennzeichnet, dass** sich die Ablaufkante (12) ausgehend von dem oberen Randbereich (13) der Laderaumtür (2) ansteigend in Richtung Laderaum erstreckt.

3. Laderaumaufbau nach einem der vorhergehenden Ansprüche, **dadurch gekennzeichnet, dass** sich die Rinne (14) in Verschlussposition der Laderaumtür (2) in ihrer Längsrichtung parallel zu der Laderaumtür (2) erstreckt.

4. Laderaumaufbau nach einem der vorhergehenden Ansprüche, **dadurch gekennzeichnet, dass** der Laderaumaufbau (1) einen Querholm (16) aufweist und dass die Rinne (14) in oder an dem Querholm (16) ausgebildet ist.

5. Laderaumaufbau nach einem der Ansprüche 1 bis 3, **dadurch gekennzeichnet, dass** der Laderaumaufbau (1) ein mit dem Querholm (16) verbundenes Querprofil (46) aufweist und dass die Rinne (14) in oder an dem Querprofil (46) ausgebildet ist.

6. Laderaumaufbau nach einem der Ansprüche 4 oder 5, **dadurch gekennzeichnet, dass** der Querholm (16) und/oder das Querprofil (46) im Querschnitt ein geschlossenes Hohlprofil aufweist.

7. Laderaumaufbau nach einem der Ansprüche 4 oder 5, **dadurch gekennzeichnet, dass** der Querholm (16) und/oder das Querprofil (46) im Querschnitt ein offenes Hohlprofil, insbesondere ein im Querschnitt S-förmiges Hohlprofil aufweist.

8. Laderaumaufbau nach Anspruch 6, **dadurch gekennzeichnet, dass** die Rinne (14) von außen in das geschlossene Hohlprofil eingeformt ist, so dass sie sich im Querschnitt von außen in das geschlossene Hohlprofil hinein erstreckt.

9. Laderaumaufbau nach Anspruch 7, **dadurch gekennzeichnet, dass** das offene Hohlprofil einen Innenraum und einen der Laderaumtür (1) in Verschlussposition zugewandten Öffnungsquerschnitt (29), durch welchen sich die Ablaufkante (12) in Verschlussposition erstreckt, aufweist und dass die Rinne (14) in dem Innenraum ausgebildet ist.

10. Laderaumaufbau nach einem der Ansprüche 4 bis 9, **dadurch gekennzeichnet, dass** der Querholm (16) und/oder das Querprofil (46) aus einem Abkantprofil gebildet sind.

11. Laderaumaufbau nach einem der Ansprüche 4 bis 10, **dadurch gekennzeichnet, dass** der Querholm (16) und/oder das Querprofil (46) aus einem Werkstoff auf Aluminium-Basis oder aus Stahl hergestellt sind.

12. Laderaumaufbau nach einem der vorhergehenden Ansprüche, **dadurch gekennzeichnet, dass** die Rinne (14) eine untere Begrenzungswand (17) aufweist, die einen der Laderaumtür (2) in Verschlussposition zugewandten erhabenen Randbereich (40) aufweist.

13. Laderaumaufbau nach Anspruch 12, **dadurch gekennzeichnet, dass** die untere Begrenzungswand (17) einen ebenen Wandbereich aufweist, der in Richtung auf den der Laderaumtür (2) in Verschlussposition zugewandten Rand (18) ansteigend ausgebildet ist.

14. Laderaumaufbau nach einem der vorhergehenden Ansprüche, **dadurch gekennzeichnet, dass** die Rinne (14) eine obere Begrenzungswand (19) aufweist, die einen der Laderaumtür (2) in Verschlussposition zugewandten tieferliegenden Wandbereich aufweist.

15. Laderaumaufbau nach Anspruch 14, **dadurch gekennzeichnet, dass** die obere Begrenzungswand (19) einen Wandbereich aufweist, der in Richtung auf den der Laderaumtür (2) in Verschlussposition zugewandten Rand (20) abfallend ausgebildet ist.

16. Laderaumaufbau nach einem der Ansprüche 14 oder 15, **dadurch gekennzeichnet, dass** die obere und die untere Begrenzungswand (17,19) der Rinne (14) an den von der Laderaumtür (2) in Verschlussposition abgewandten Rändern (21, 22) mittels einer Verbindungswand (23) verbunden sind.

17. Laderaumaufbau nach einem der vorhergehenden Ansprüche, **dadurch gekennzeichnet, dass** der der Laderaumtür (2) abgewandte Rand (24) der Ablaufkante (12) in Verschlussposition der Laderaumtür (2) von der Verbindungswand (23) der Rinne (14) beabstandet ist.

18. Laderaumaufbau nach einem der vorhergehenden Ansprüche, **dadurch gekennzeichnet, dass** die Laderaumtür (2) eine dem Laderaum in Verschlussposition zugewandte Innenwandung (25) aufweist und dass der der Laderaumtür (2) abgewandte Rand (24) der Ablaufkante (12) in einer senkrechten Projektion über die Innenwandung (25) hinausragt.

19. Laderaumaufbau nach einem der vorhergehenden Ansprüche, **dadurch gekennzeichnet, dass** der Dichtung (10) an der Laderaumtür ein Dichtungselement (26) mit einer Dichtwandung (27) zugeordnet ist zur dichtenden Zusammenwirkung der Dichtwandung (27) mit einem Gegenwandungsbereich (28), der sich unterhalb eines der Laderaumtür (2) in Verschlussposition zugewandten Öffnungsquerschnittes (29) der Rinne (14) erstreckt.

20. Laderaumaufbau nach Anspruch 19, **dadurch gekennzeichnet, dass** das Dichtungselement (26) als Strangprofil aus einem nachgiebigen Werkstoff, insbesondere aus Gummi oder Kunststoff, ausgebildet ist.

21. Laderaumaufbau nach einem der Ansprüche 19 oder 20, **dadurch gekennzeichnet, dass** das Dichtungselement (26) einen Hohlquerschnitt aufweist.

22. Laderaumaufbau nach einem der Ansprüche 19 bis 21, **dadurch gekennzeichnet, dass** das Dichtungselement (26) formschlüssig und/oder kraftschlüssig an der Innenwandung (25) der Laderaumtür (2) befestigt ist.

23. Laderaumaufbau nach einem der Ansprüche 19 bis 22, **dadurch gekennzeichnet, dass** die Ablaufkante (12) eine Unterseite (31) aufweist und dass das Dichtungselement (26) zu der Unterseite (31) unterhalb angrenzend angeordnet ist.

24. Laderaumaufbau nach einem der vorhergehenden Ansprüche, **dadurch gekennzeichnet, dass** die Laderaumtür (2) oberseitig ein Randprofil (32) aufweist und dass die Ablaufkante (12) einstückig mit dem Randprofil (32) geformt ist.

25. Laderaumaufbau nach Anspruch 24, **dadurch gekennzeichnet, dass** an dem Randprofil (32) dazu parallel verlaufend ein Profilteil (43) befestigt ist und dass die Ablaufkante (12) einstückig an dem Profilteil (43) ausgebildet ist.

26. Laderaumaufbau nach einem der Ansprüche 19 bis 25, **dadurch gekennzeichnet, dass** die Ablaufkante (12) oberhalb der Dichtwandung (27) einstückig an dem Dichtungselement (26) ausgebildet ist.

27. Laderaumaufbau nach einem der Ansprüche 4 bis 26, **dadurch gekennzeichnet, dass** in einer in Einbauposition oberen Wandung des Querholmes (16) und/oder des Querprofiles (46) eine zweite Rinne (33) ausgebildet ist.

28. Laderaumaufbau nach einem der Ansprüche 4 bis 27, **dadurch gekennzeichnet, dass** der Querholm (16) und/oder das Querprofil (46) einen rechteckigen Querschnitt aufweist mit zwei zueinander senkrecht benachbarten, eine Kante (34) einschließenden Wandungen (35, 36), wobei an der ersten und an der zweiten Wandung (35, 36) jeweils in dem von der Kante (34) abgewandten Randbereich (37,38) eine Rinne (33,14) ausgebildet ist.

29. Laderaumaufbau nach einem der Ansprüche 4 bis 28, **dadurch gekennzeichnet, dass** das Querprofil (46) einen einseitig offenen Querschnittsbereich bildet, dessen Innenkontur an eine Außenkontur des Querholmes (16) angepasst ist.

30. Laderaumaufbau nach Anspruch 29, **dadurch gekennzeichnet, dass** der einseitig offene Querschnittsbereich von einem Winkelprofil (47) berandet ist und dass an dem Querprofil (46) in dessen Längsrichtung verlaufende, zueinander parallel orientierte, vertikal beabstandete Aufnahmenuten (48) vorgesehen sind, in denen das Winkelprofil (47) jeweils formschlüssig halterbar ist.

31. Laderaumaufbau nach einem der Ansprüche 4 bis 30, **dadurch gekennzeichnet, dass** an dem Querholm (16) und/oder an dem Querprofil (46) oberseitig eine Profilleiste (49) befestigt ist, welche einen in Einbaulage senkrechten, in Längsrichtung des Querholmes (16) bzw. des Querprofiles (46) verlaufenden Steg (50) aufweist, dessen oberer Randbereich (51) in Vorwärts-Fahrtrichtung des Lastkraftwagens abgekrümmt ist.

32. Laderaumaufbau nach Anspruch 31, **dadurch gekennzeichnet, dass** an dem senkrecht verlaufenden Steg (50) an einer dem Laderaum abgewandten senkrechten Wandung (52) eine Leiste (53) angeformt ist, die zu ihrem in ihrer Längsrichtung verlaufenden, freien Randbereich (54) hin ansteigend ausgebildet ist.

33. Laderaumaufbau nach einem der vorhergenenden Ansprüche, **dadurch gekennzeichnet, dass** in die Unterseite (31) der Ablaufkante (12) im Bereich des der Laderaumtür (2) abgewandten Randes (24) eine Nut (58), insbesondere mit einem Rechteckquerschnitt, eingeformt ist, welche sich in Längsrichtung parallel zu dem Rand (24) erstreckt.

## Claims

1. Container superstructure, in particular of a lorry, having a container door (2) which can be pivoted about a vertical axis of rotation and has a seal (10) for interacting in a sealing manner with a counter-wall (11) of the container superstructure (1), **characterized in that** the seal (10) is assigned a run-off edge (12) which, starting from an upper peripheral region (13) of the container door (2), in a closed position, extends, in the direction of the container, into a channel (14) which is bordered by the counter-wall (11) and is directed towards the container door (2) in the closed position.

2. Container superstructure according to Claim 1, **characterized in that** the run-off edge (12), starting from the upper peripheral region (13) of the container door (2), slopes up in the direction of the container.

3. Container superstructure according to one of the preceding claims, **characterized in that** the channel (14), in the closed position of the container door (2), has its longitudinal direction extending parallel to the container door (2).

4. Container superstructure according to one of the preceding claims, **characterized in that** the container superstructure (1) has a transverse member (16), and **in that** the channel (14) is formed in or on the transverse member (16).

5. Container superstructure according to one of Claims 1 to 3, **characterized in that** the container superstructure (1) has a transverse profile (46) connected to the transverse member (16), and **in that** the channel (14) is formed in or on the transverse profile (46).

6. Container superstructure according to either of Claims 4 and 5, **characterized in that** the transverse member (16) and/or the transverse profile (46) have/has a closed hollow profile in cross-section.

7. Container superstructure according to either of Claims 4 and 5, **characterized in that** the transverse member (16) and/or the transverse profile (46) have/has an open hollow profile in cross-section, in particular a cross-sectionally S-shaped hollow profile.

8. Container superstructure according to Claim 6, **characterized in that** the channel (14) is formed in the closed hollow profile from the outside, so that it extends into the closed hollow profile from the outside, as seen in cross-section.

9. Container superstructure according to Claim 7, **characterized in that** the open hollow profile has an interior and an opening cross-section (29) which is directed towards the container door (2) in the closed position and through which the run-off edge (12) extends in the closed position, and **in that** the channel (14) is formed in the interior.

10. Container superstructure according to one of Claims 4 to 9, **characterized in that** the transverse member (16) and/or the transverse profile (46) are/is formed from an angled profile.

11. Container superstructure according to one of Claims 4 to 10, **characterized in that** the transverse member (16) and/or the transverse profile (46) are/is produced from an aluminium-based material or from steel.

12. Container superstructure according to one of the preceding claims, **characterized in that** the channel (14) has a lower boundary wall (17) which has a raised peripheral region (40) which is directed towards the container door (2) in the closed position.

13. Container superstructure according to Claim 12, **characterized in that** the lower boundary wall (17) has a planar wall region which slopes up in the direction of the periphery (18), which is directed towards the container door (2) in the closed position.

14. Container superstructure according to one of the preceding claims, **characterized in that** the channel (14) has an upper boundary wall (19) with a relatively low-level wall region which is directed towards the container door (2) in the closed position.

15. Container superstructure according to Claim 14, **characterized in that** the upper boundary wall (19) has a wall region which slopes down in the direction of the periphery (20), which is directed towards the container door (2) in the closed position.

16. Container superstructure according to either of Claims 14 and 15, **characterized in that** the upper and the lower boundary walls (17, 19) of the channel (14) are connected by means of a connecting wall (23) at the peripheries (21, 22), which are directed away from the container door (2) in the closed position.

17. Container superstructure according to one of the preceding claims, **characterized in that** the periphery (24) of the run-off edge (12), this periphery being directed away from the container door (2), is spaced apart from the connecting wall (23) of the channel (14) in the closed position of the container door (2).

18. Container superstructure according to one of the preceding claims, **characterized in that** the container door (2) has an inner wall (25) which is directed towards the container in the closed position, and **in that** the periphery (24) of the run-off edge (12), this periphery being directed away from the container door (2), projects beyond the inner wall (25) in a vertical projection.

19. Container superstructure according to one of the preceding claims, **characterized in that** the seal (10) on the container door is assigned a sealing element (26) with a sealing wall (27) for the sealing interaction of the sealing wall (27) with a counter-wall region (28) which extends beneath an opening cross-section (29) of the channel (14), this opening cross-section being directed towards the container door (2) in the closed position.

20. Container superstructure according to Claim 19, **characterized in that** the sealing element (26) is formed as an extruded profile from a compliant material, in particular from rubber or plastics material.

21. Container superstructure according to either of Claims 19 and 20, **characterized in that** the sealing element (26) has a hollow cross-section.

22. Container superstructure according to one of Claims 19 to 21, **characterized in that** the sealing element (26) is secured in a positively locking and/or force-fitting manner on the inner wall (25) of the container door (2).

23. Container superstructure according to one of Claims 19 to 22, **characterized in that** the run-off edge (12) has an underside (31), and **in that** the sealing element (26) is disposed adjacent to and beneath the underside (31).

24. Container superstructure according to one of the preceding claims, **characterized in that** the container door (2) has a peripheral profile (32) on the upper side, and **in that** the run-off edge (12) is formed integrally with the peripheral profile (32).

25. Container superstructure according to Claim 24, **characterized in that** a profile part (43) is secured on the peripheral profile (32), parallel to the latter, and **in that** the run-off edge (12) is formed integrally on the profile part (43).

26. Container superstructure according to one of Claims 19 to 25, **characterized in that** the run-off edge (12) is formed integrally on the sealing element (26) above the sealing wall (27).

27. Container superstructure according to one of Claims 4 to 26, **characterized in that** a second channel (33) is formed in an upper wall of the transverse member (16) and/or of the transverse profile (46), as seen in the installed position.

28. Container superstructure according to one of Claims 4 to 27, **characterized in that** the transverse member (16) and/or the transverse profile (46) have/has a rectangular cross-section with two adjacent walls (35, 36) which are perpendicular to one another and enclose an edge (34), a channel (33, 14) being formed on the first and the second walls (35, 36) in each case in the peripheral region (37, 38), which is directed away from the edge (34).

29. Container superstructure according to one of Claims 4 to 28, **characterized in that** the transverse profile (46) forms a cross-sectional region which is open on one side and the inner contour of which is adapted to an outer contour of the transverse member (16).

30. Container superstructure according to Claim 29, **characterized in that** the cross-sectional region which is open on one side is bordered by an angle profile (47), and **in that** the transverse profile (46) contains vertically spaced-apart accommodating grooves (48) which run in the longitudinal direction of the transverse profile, are oriented parallel to one another and in which the angle profile (47) can be secured in a positively locking manner in each case.

31. Container superstructure according to one of Claims 4 to 30, **characterized in that** secured on the upper side of the transverse member (16) and/or of the transverse profile (46) is a profile strip (49) which has a vertical crosspiece (50), as seen in the installed position, which runs in the longitudinal direction of the transverse member (16) and/or of the transverse profile (46) and the upper peripheral region (51) of which is curved in the direction of forward travel of the lorry.

32. Container superstructure according to Claim 31, **characterized in that** integrally formed on the vertically running crosspiece (50), on a vertical wall (52) which is directed away from the container, is a strip (53) which slopes up in the direction of its free, longitudinally running peripheral region (54).

33. Container superstructure according to one of the preceding claims, **characterized in that** a groove (58), in particular with a rectangular cross-section, is formed in the underside (31) of the run-off edge (12), in the region of the periphery (24) directed away from the container door (2), and extends parallel to the periphery (24) in the longitudinal direction.

## Revendications

1. Structure d'espace de chargement, en particulier d'un véhicule de charge ou camion, ayant une porte (2) d'espace de chargement pivotante autour d'un axe vertical, qui présente un joint (10) pour une interaction d'étanchéité avec une contre-paroi (11) de la structure (1) d'espace de chargement, **caractérisée en ce que** le joint (10) est raccordé à une bordure de débordement (12) qui s'étend vers l'intérieur, à partir d'une zone de bord supérieure (13) de la porte (2) d'espace de chargement en position fermée, en direction de l'espace de chargement, dans une rigole (14) bordée par la contre-paroi (11), tournée vers la porte d'espace de chargement (2) en position fermée.

2. Structure d'espace de chargement selon la revendication 1, **caractérisée en ce que** la bordure de débordement (12) s'étend à partir de la zone de bord supérieure (13) de la porte d'espace de chargement (2) en montant en direction de l'espace de chargement.

3. Structure d'espace de chargement selon l'une des revendications précédentes, **caractérisée en ce que** la rigole (14) s'étend, en position fermée de la porte d'espace de chargement (2), dans le sens de sa longueur, parallèlement à la porte d'espace de chargement (2).

4. Structure d'espace de chargement selon l'une des revendications précédentes, **caractérisée en ce que** la Structure d'espace de chargement (1) présente un longeron transversal (16) et **en ce que** la rigole (14) est formée dans ou sur le longeron transversal (16).

5. Structure d'espace de chargement selon l'une des revendications 1 à 3, **caractérisée en ce que** la Structure d'espace de chargement (1) présente un profilé transversal (46) relié au longeron transversal (16) et **en ce que** la rigole (14) est formée dans ou sur le profilé transversal (46).

6. Structure d'espace de chargement selon l'une des revendications 4 ou 5, **caractérisée en ce que** le longeron transversal (16) et/ou le profilé transversal (46) présentent, en section transversale, un profil creux fermé.

7. Structure d'espace de chargement selon l'une des revendications 4 ou 5, **caractérisée en ce que** le longeron transversal (16) et/ou le profilé transversal (46) présentent, en section transversale, un profil creux ouvert, en particulier un profilé creux en forme de S en section transversale.

8. Structure d'espace de chargement selon la revendication 6, **caractérisée en ce que** la rigole (14) est formée de l'extérieur dans le profilé creux fermé, de sorte que, en section transversale, de l'extérieur, elle s'étende vers l'intérieur dans le profilé creux fermé.

9. Structure d'espace de chargement selon la revendication 7, **caractérisée en ce que** le profilé creux ouvert présente un espace intérieur et une section transversale d'ouverture (29) tournée vers la porte d'espace de chargement (2) en position fermée, à travers laquelle s'étend la bordure de débordement (12) en position fermée, et **en ce que** la rigole (14) est formée dans l'espace intérieur.

10. Structure d'espace de chargement selon l'une des revendications 4 à 9, **caractérisée en ce que** le longeron transversal (16) et/ou le profilé transversal (46) sont formés à partir d'un profilé chanfreiné.

11. Structure d'espace de chargement selon l'une des revendications 4 à 10, **caractérisée en ce que** le longeron transversal (16) et/ou le profilé transversal (46) sont fabriqués dans un matériau à base d'aluminium ou en acier.

12. Structure d'espace de chargement selon l'une des revendications précédentes, **caractérisée en ce que** la rigole (14) comporte une paroi de séparation inférieure (17) qui présente une zone de bord (40) surélevée tournée vers la porte d'espace de chargement (2) en position fermée.

13. Structure d'espace de chargement selon la revendication 12, **caractérisée en ce que** la paroi de séparation inférieure (17) présente une zone de paroi plane, qui est formée en montant dans la direction du bord (18) tourné vers la porte d'espace de chargement (2), en position fermée.

14. Structure d'espace de chargement selon l'une des revendications précédentes, **caractérisée en ce que** la rigole (14) comporte une paroi de séparation supérieure (19) qui présente une zone de paroi située plus bas et tournée vers la porte d'espace de chargement (2) en position fermée.

15. Structure d'espace de chargement selon la revendication 14, **caractérisée en ce que** la paroi de séparation supérieure (19) présente une zone de bord, qui est formée tombante dans la direction du bord (20) tourné vers la porte d'espace de chargement (2) en position fermée.

16. Structure d'espace de chargement selon l'une des revendications 14 ou 15, **caractérisée en ce que** les parois de séparation supérieure et inférieure (17, 19) de la rigole (14) sont reliées aux bords (21, 22) opposés à la porte d'espace de chargement (2) en position fermée, au moyen d'une paroi de liaison (23).

17. Structure d'espace de chargement selon l'une des revendications précédentes, **caractérisée en ce que** le bord (24) de la bordure de débordement (12) opposé à la porte d'espace de chargement (2), en position fermée de la porte d'espace de chargement (2), est espacé de la paroi de liaison (23) de la rigole (14).

18. Structure d'espace de chargement selon l'une des revendications précédentes, **caractérisée en ce que** la porte d'espace de chargement (2) présente une paroi intérieure (25) tournée vers l'espace de chargement en position fermée et **en ce que** le bord (24) de la bordure de débordement (12) opposé à la porte d'espace de chargement (2) fait saillie en projection perpendiculaire au-dessus de la paroi intérieure (25).

19. Structure d'espace de chargement selon l'une des revendications précédentes, **caractérisée en ce qu'**un élément d'étanchéité (26) avec une paroi d'étanchéité (27) est associé au joint (10) au niveau de la porte d'espace de chargement pour une interaction d'étanchéité de la paroi d'étanchéité (27) avec une zone de contre-paroi (28) qui s'étend en dessous d'une section transversale d'ouverture (29) de la rigole (14), tournée vers la porte d'espace de chargement (2) en position fermée.

20. Structure d'espace de chargement selon la revendication 19, **caractérisée en ce que** l'élément d'étanchéité (26) est formé comme un profilé extrudé en un matériau souple, en particulier en élastomère ou en matière plastique.

21. Structure d'espace de chargement selon l'une des revendications 19 ou 20, **caractérisée en ce que** l'élément d'étanchéité (26) présente une section transversale creuse.

22. Structure d'espace de chargement selon l'une des revendications 19 à 21, **caractérisée en ce que** l'élément d'étanchéité (26) est fixé à la paroi intérieure (25) de la porte d'espace de chargement (2) par une liaison de forme et/ou à force.

23. Structure d'espace de chargement selon l'une des revendications 19 à 22, **caractérisée en ce que** la bordure de débordement (12) présente une face inférieure (31) et **en ce que** l'élément d'étanchéité (26) est disposé de façon adjacente sous la face inférieure (31).

24. Structure d'espace de chargement selon l'une des revendications précédentes, **caractérisée en ce que** la porte d'espace de chargement (2) présente sur sa face supérieure un profilé de bord (32) et **en ce que** la bordure de débordement (12) est formée d'un seul tenant avec le profilé de bord (32).

25. Structure d'espace de chargement selon la revendication 24, **caractérisée en ce qu'**une pièce profilée (43) est fixée au profilé de bord (32) et s'étend parallèlement à ce dernier, et **en ce que** la bordure de débordement (12) est formée d'un seul tenant sur la pièce profilée (43).

26. Structure d'espace de chargement selon l'une des revendications 19 à 25, **caractérisée en ce que** la bordure de débordement (12) est formée au-dessus de la paroi d'étanchéité (27) d'un seul tenant sur l'élément d'étanchéité (26).

27. Structure d'espace de chargement selon l'une des revendications 4 à 26, **caractérisée en ce qu'**une deuxième rigole (33) est formée dans une paroi supérieure du longeron transversal (16) et/ou du profilé transversal (46), en position de montage.

28. Structure d'espace de chargement selon l'une des revendications 4 à 27, **caractérisée en ce que** le longeron transversal (16) et/ou le profil transversal (46) présentent une section transversale à angle droit, avec deux parois (35, 36) perpendiculaires l'une par rapport à l'autre, voisines, comportant une arête (34), une rigole (33, 14) étant formée sur la première et la seconde parois (35, 36) à chaque fois dans la zone de bord (37, 38) opposée à l'arête (34).

29. Structure d'espace de chargement selon l'une des revendications 4 à 28, **caractérisée en ce que** le profil transversal (46) forme une zone à section transversale ouverte d'un seul côté, dont le contour interne est adapté à un contour externe du longeron transversal (16).

30. Structure d'espace de chargement selon la revendication 29, **caractérisée en ce que** la zone à section transversale ouverte d'un seul côté est bordée par un profilé en cornière (47) et **en ce que** des rainures de réception (48) sont prévues sur le profil transversal (46), s'étendant dans le sens de sa longueur, orientées parallèlement les unes aux autres, espacées verticalement, et dans lesquelles le profilé ou cornière (47) peut à chaque fois être maintenu par une liaison de formes.

31. Structure d'espace de chargement selon l'une des revendications 4 à 30, **caractérisée en ce qu'**une barrette profilée (49) est fixée au longeron transversal (16) et/ou au profil transversal (46) sur le côté supérieur, laquelle barrette présente une ailette (50) verticale en position de montage, s'étendant dans le sens de la longueur du longeron transversal (16) ou du profilé transversal (46), et dont la zone de bord supérieure (51) est recourbée dans le sens de la marche avant du camion.

32. Structure d'espace de chargement selon la revendication 31, **caractérisée en ce qu'**une barrette (53) est formée sur l'ailette (50) s'étendant verticalement au niveau d'une paroi (52) verticale opposée à l'espace de chargement, nervure qui est formée en montant vers sa zone de bord libre (54) s'étendant dans le sens de sa longueur.

33. Structure d'espace de chargement selon l'une des revendications précédentes, **caractérisée en ce qu'**une rainure (58) est formée sur la face inférieure (31) de la bordure de débordement (12) dans la zone du bord (24) opposé à la porte de l'espace de chargement (2), en particulier avec une section transversale à angle droit, rainure qui s'étend dans le sens de la longueur parallèlement au bord (24).
